# EUROPEAN PATENT APPLICATION

(11) **EP 2 939 846 A1**
(43) Date of publication of application: **04.11.2015**
(21) Application number: 13868729.8
(22) Date of filing: 27.12.2013
(51) Int. Cl.: B44C 5/04, B44F 1/08, B44C 5/00

(54) **THREE-DIMENSIONAL DECORATION**

(30) Priority: 31.12.2012 KR 20120158551
(71) Applicant: Choo, Hye Jung, Nowon-gu, Seoul 139-795 (KR); Kim, V, Nowon-gu, Seoul 139-795 (KR)
(72) Inventor: Choo, Hye Jung, Nowon-gu, Seoul 139-795 (KR); Kim, V, Nowon-gu, Seoul 139-795 (KR)
(74) Representative: Piésold, Alexander James
(86) International application number: PCT/KR2013/012236
(87) International publication number: WO 2014/104769

(57) **Abstract**

The present invention discloses a three-dimensional decoration. A three-dimensional decoration in accordance with a first embodiment of the present invention includes: a lenticular lens; a first image layer arranged on a rear side of the lenticular lens; a first cover arranged on a front side of the lenticular lens; and a first spacer configured for separating the first cover from the lenticular lens in such a way that a first spatial layer is formed in between the first cover and the lenticular lens. An image of the first image layer is three-dimensionally formed in the first spatial layer by binocular parallax through the lenticular lens.

## Description

### CROSS-REFERENCE TO RELATED APPLICATIONS

This application claims the benefit of Korean Patent Application No. 10-2012-0158551, filed with the Korean Intellectual Property Office on December 31, 2012, the disclosure of which is incorporated herein by reference in its entirety.

### BACKGROUND

### 1. Technical Field

The present invention relates to a three-dimensional decoration.

### 2. Background Art

Transparent materials, such as glass, crystal glass, acrylic, etc., are widely used for decorative purposes. For example, text may be written on or engraved in the surface of a transparent material for use as a plaque, or an image (picture or drawing) may be printed on the back of a transparent material or inserted into the transparent material for use as an alternative to a picture frame or as a key chain. Other various decorations utilizing the aesthetic nature of transparent materials can be readily found.

However, these decorations utilizing the transparent materials are limited to merely realizing the text, picture and/or drawing as a two-dimensional image on an external surface of the materials. Moreover, inserting the image in the transparent materials requires an additional process, and it is hardly possible to change the image of a pre-fabricated decoration.

Moreover, the conventional three-dimensional transparent decorations are not only heavy but also costly to manufacture due to the use of transparent materials such as crystal glass.

The related art of the present invention is disclosed in Korea Patent Publication No. 10-2008-0099091 (November 12, 2008).

### SUMMARY

The present invention provides a three-dimensional decoration having a simple structure that can realize various three-dimensional images and can be easily manufactured and used.

An aspect of the present invention provides a three-dimensional decoration that includes: a lenticular lens; a first image layer arranged on a rear side of the lenticular lens; a first cover arranged on a front side of the lenticular lens; and a first spacer configured for separating the first cover from the lenticular lens in such a way that a first spatial layer is formed in between the first cover and the lenticular lens, wherein an image of the first image layer is three-dimensionally formed in the first spatial layer by binocular parallax through the lenticular lens.

Here, the image of the first image layer may be projected entirely or partially to a front side of the first spatial layer.

The image of the first image layer may be receded entirely or partially to a rear side of the first spatial layer.

The three-dimensional decoration may further include: a second cover arranged on a rear side of the first image layer; and a second spacer configured for separating the second cover from the first image layer in such a way that a second spatial layer is formed in between the second cover and the first image layer.

The lenticular lens and the first image layer may be each formed in a curved shape in such a way that a distance of separation from the first cover becomes smaller toward end portions thereof.

The three-dimensional decoration may further include a second image layer being attached to the first cover.

The three-dimensional decoration may further include a second image layer being attached to the lenticular lens.

The three-dimensional decoration may further include a second image layer being arranged in the first spatial layer.

The second image layer may have flexion or curvature formed thereon.

The second image layer may be formed in a three-dimensional shape.

The lenticular lens and the first image layer may be each partitioned into a plurality of sections that have different forms and are separated from one another.

According to certain embodiments of the present invention, the image of the first image layer are three-dimensionally realized in the first spatial layer through the lenticular lens, and thus a greater variety of three-dimensional image may be realized through a simple structure, and the three-dimensional decoration may be manufactured and used more easily.

### BRIEF DESCRIPTION OF DRAWINGS

FIG. 1 is a perspective view showing a three-dimensional decoration in accordance with a first embodiment of the present invention.
FIG. 2 is an exploded perspective view showing the three-dimensional decoration in accordance with a first embodiment of the present invention.
FIG. 3 is a cross-sectional view along the A-A line shown in FIG. 1.
FIG. 4 is a perspective view showing a three-dimensional decoration in accordance with a second embodiment of the present invention.
FIG. 5 is a perspective view showing a three-dimensional decoration in accordance with a third embodiment of the present invention.
FIG. 6 is a perspective view showing a three-dimensional decoration in accordance with a fourth embodiment of the present invention.
FIG. 7 illustrates an example of a calendar realized through the three-dimensional decoration in accordance with the first embodiment of the present invention.

### DETAILED DESCRIPTION

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the ideas and scope of the present invention. Throughout the description of the present invention, when describing a certain relevant conventional technology is determined to evade the point of the present invention, the pertinent detailed description will be omitted.

Terms such as "first" and "second" can be used in describing various elements, but the above elements shall not be restricted to the above terms. The above terms are used only to distinguish one element from the other.

The terms used in the description are intended to describe certain embodiments only, and shall by no means restrict the present invention. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

Hereinafter, some embodiments of a three-dimensional decoration will be described in detail with reference to the accompanying drawings. Identical or corresponding elements will be given the same reference numerals, regardless of the figure number, and any redundant description of the identical or corresponding elements will not be repeated.

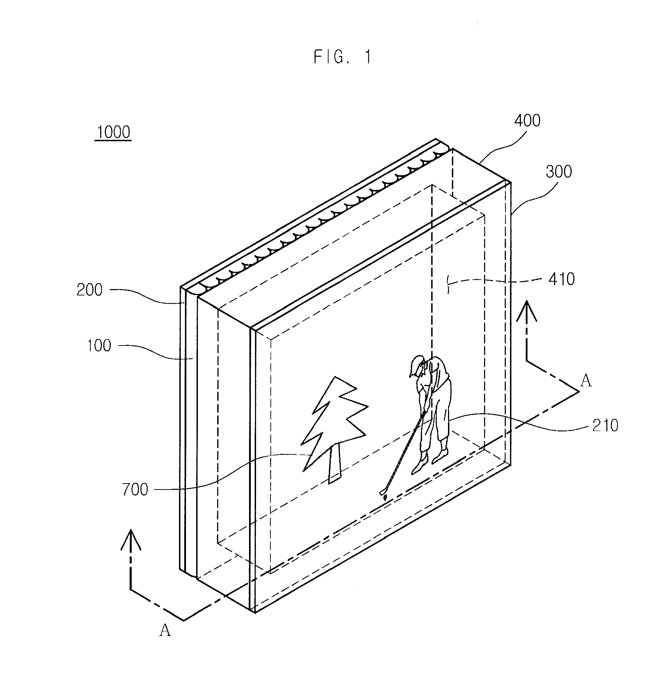

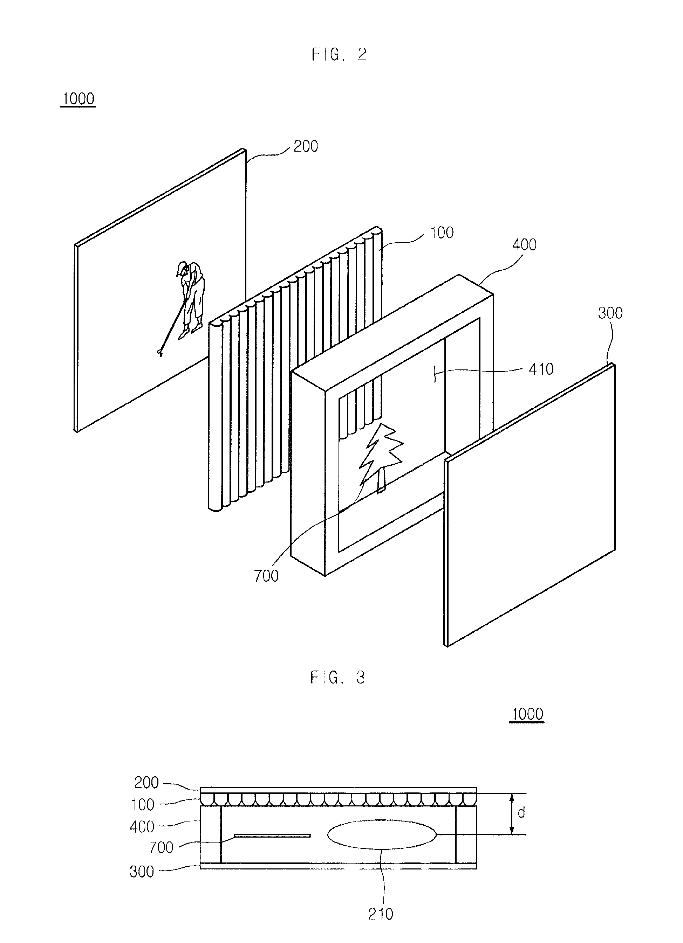

FIG. 1 is a perspective view showing a three-dimensional decoration in accordance with a first embodiment of the present invention. FIG. 2 is an exploded perspective view showing the three-dimensional decoration in accordance with a first embodiment of the present invention. FIG. 3 is a cross-sectional view along the A-A line shown in FIG. 1.

As illustrated in FIG. 1 to FIG. 3, a three-dimensional decoration 1000 in accordance with a first embodiment of the present invention includes a lenticular lens 100, a first image layer 200, a first cover 300 and a first spacer 400, and may further include a second image layer 700. Here, an image 210 of the first image layer 200 may be three-dimensionally formed in a first spatial layer 410 by binocular parallax through the lenticular lens 100.

The lenticular lens 100 is arranged in front of the first image layer 200 to allow the image 210 of the first image layer 200 to be three-dimensionally realized. Here, the lenticular lens 100, which has a plurality of rod-shaped convex lenses arranged side by side, allows the image 210 to be perceived three-dimensionally by having different images projected to the left and right eyes, respectively.

The main reason why three-dimensionality can be perceived through the lenticular lens 100 is the binocular parallax because the human eyes are separated transversely by about 65mm.

Specifically, the left eye and the right eye recognize a plane image having passed through the lenticular lens 100 as two different images, respectively, which are then transferred to the brain through the retinae. These two different images are then combined in the brain to reproduce the sense of depth of the three-dimensional image 210 and the sense of location at which the three-dimensional image 210 is located in the first spatial layer 410.

In such a case, the greater the difference of viewing angles between the left and right eyes, the closer the image is perceived to be located. On the contrary, the smaller the difference of viewing angles between the left and right eyes, the farther the image is perceived to be located. Accordingly, by using this principle, the location where the image 210 is formed (i.e., the size of "d") may be adjusted.

The first image layer 200 may include a plane image of the image 210 to be realized three-dimensionally that is a printout of a picture, drawing or text arranged on a back side of the lenticular lens 100. The image 210 is a shape that appears three-dimensional after the image included in the first image layer 200 passes through the lenticular lens 100 and thus is virtual image realized through an optical illusion caused by the above-described binocular parallax.

In such a case, the location at which the three-dimensional image is formed (i.e., the size of "d") after the plane image passes through the lenticular lens 100 may be adjusted by formatting two images projected to the left and right eyes, respectively, to alternate with each other in pixel units.

Here, in the three-dimensional decoration 1000 in accordance with the present embodiment, the three-dimensional image 210 may be realized in the first spatial layer 410 by fabricating the plane image in such a way that the image 210 of the first image layer 200 is formed in the first spatial layer 410.

As the first image layer 200 is arranged on the back side of the lenticular lens 100, the image 210 to be realized in the three-dimensional decoration 1000 in accordance with the present embodiment may be replaced by replacing the first image layer 200 and the lenticular lens 100.

Moreover, since there is no fabrication process required for inserting an actual three-dimensional image, rather than a virtual image, inside a transparent material such as crystal glass, the three-dimensional decoration 1000 in accordance with the present embodiment may be manufactured in a simpler fashion.

The first cover 300, which is arranged in front of the lenticular lens 100 to cover the first spatial layer 410, may form a front external appearance of the three-dimensional decoration 1000 in accordance with the present embodiment. Moreover, in addition to covering the lenticular lens 100, the first image layer 200 and the first spatial layer 410, the first cover 300 may act as a crystal glass-like transparent material together with the first spatial layer 410 so as to create a visual effect that is similar to having the image 210 formed inside the transparent material.

Here, the first cover 300 may include any materials that have a sufficient transparency to allow the image 210 formed in the first spatial layer 410 to be visible to the naked eye.

The first spacer 400, which separates the first cover 300 from the lenticular lens 100 so as to allow the first spatial space 410 to be formed in between the first cover 300 and the lenticular lens 100, may be variably arranged within a range of not interfering with the location at which the image 210 is formed.

Particularly, as illustrated in FIG. 1 to FIG. 3, by arranging the first spacer 400 along the boundaries of the first cover 300, the first spacer 400 may not only form a lateral external appearance of the three-dimensional decoration 1000 in accordance with the present embodiment but also create a visual effect of a picture frame to allow the three-dimensional decoration 1000 in accordance with the present embodiment to be actually realized as a picture frame.

For instance, by variably forming the shape of a picture frame through the use of the first spacer 400, a TV monitor-like shape may be implemented as if a 3D TV with a 3D screen turned on is visually expressed through the three-dimensional decoration 1000.

Here, the first spatial layer 410, which refers to a space in between the first cover 300 and the lenticular lens 100, may be formed to have a predetermined width (greater than or equal to "d") to allow the image 210 of the first image layer 200 to be formed in the first spatial layer 410.

In such a case, the first spatial layer 410 may be formed as a typical air layer or may be varied as necessary, for example, as a vacuum layer or a layer including a material having a scattering or reflecting effect.

As such, the three-dimensional decoration 1000 in accordance with the present embodiment may implement various three-dimensional images through a simple structure, because the image 210 of the first image layer 200 is three-dimensionally realized in the first spatial layer 410 through the lenticular lens 100.

Particularly, since a visual effect similar to those realized using a transparent material such as crystal glass may be provided through the first spatial layer 410 and the first cover 300 without actually using the transparent material such as crystal glass, the three-dimensional decoration 1000 in accordance with the present embodiment may be readily manufactured and used owing to its lower manufacturing cost and lighter weight.

The second image layer 700 includes a printout of a picture, drawing or text to enhance the three-dimensional aesthetic characteristics together with the three-dimensional image 210 realized by the three-dimensional decoration 1000 in accordance with the present embodiment. In other words, decorative effects may be realized in various ways, for example, by having a family photo included in the second image layer 700 and having the three-dimensional image 210 implemented as a surrounding environment of the family photo.

Particularly, by using a user's photo for the second image layer 700, it may be possible to manufacture and use a personalized three-dimensional decoration at a relatively low cost.

For example, by attaching the second image layer 700 to the first cover 300 and placing the second image layer 700 relatively closer to the user, it is possible to have the second image layer 700 to relatively stand out with the image 210 as a background.

Moreover, by attaching the second image layer 700 to the lenticular lens 100 and placing the second image layer 700 relatively farther from the user, it is possible to have the second image layer 700 to be perceived as being behind the virtual three-dimensional image 210 and to have the image 210 to relatively stand out.

The principle behind such effects is that, since it is possible to recognize the precise placement of the second image layer 700 in the first spatial layer 410 because the second image layer 700 is a real image, the second image layer 700 plays the role of a reference coordinate in the first spatial layer 400, and thus the virtual three-dimensional image 210 stands out because the position of the virtual three-dimensional image 210 is perceived better.

Similarly, the second image layer 700 may be placed in the middle of the first spatial layer 410 to allow the second image layer 700 to be mixed with the virtual image 210 and to be assimilated three-dimensionally. Moreover, there may be many other variations as necessary for enhancing the three-dimensional effect.

Here, the second image layer 700 may have flexion or curvature formed thereon to multiply the three-dimensional effect. That is, the three-dimensional effect may be further enhanced together with the image 210 by forming the flexion or curvature on the second image layer 700 so as to provide a sense of perspective to the second image layer 700.

Moreover, the second image layer 700 itself may be formed as a three-dimensional body having a three-dimensional shape. For example, the second image layer 700 may be formed in the three-dimensional shape of a doll, and a visual effect of emphasizing the three-dimensional shape may be provided through the image 210, thereby further enhancing the visual three-dimensional effect.

Furthermore, the second image layer 700 may also have a lenticular lens arranged thereon so that a three-dimensional image is realized in addition to the image 210 of the first image layer 200. Particularly, as the distance of the position (d) of the three-dimensional image 210 that can be realized by the single lenticular lens 100 may be restricted, it is possible to overcome this restriction of the position (d) by arranging lenticular lenses for the plurality of image layers, respectively.

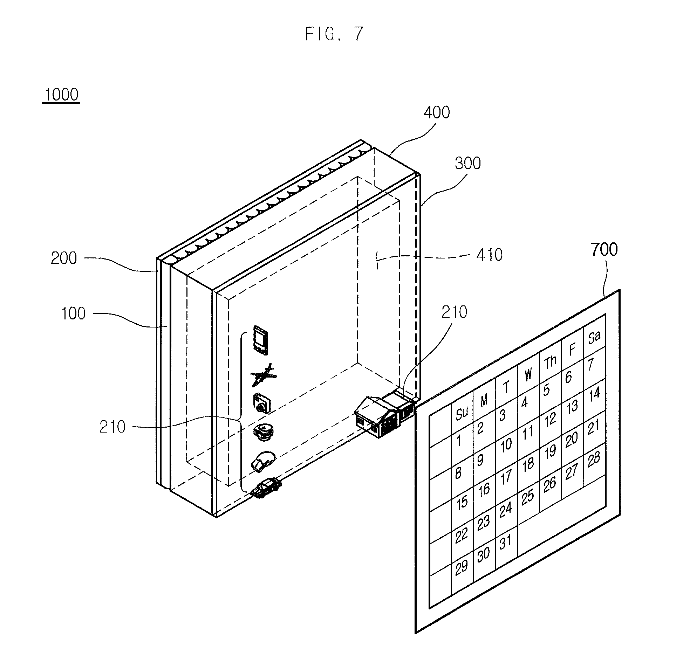

FIG. 7 illustrates an example of a calendar realized through the three-dimensional decoration in accordance with the first embodiment of the present invention.

In the three-dimensional decoration 1000 in accordance with the present embodiment, the lenticular lens 100 and the first image layer 200 may be each partitioned into a plurality of sections that have different forms and are separated from one another. Here, the forms are deemed different if at least one of the shape, appearance and color is different.

Hereinafter, an example of the three-dimensional decoration 1000 in accordance with the present embodiment with the lenticular lens 100 and the first image layer 200 partitioned into a plurality of sections will be described with reference to FIG. 7.

As illustrated in FIG. 7, the lenticular lens 100 and the first image layer 200 may be each partitioned into a plurality of sections that are separated from one another, and each of the sections may have a different color or drawing expressed therein, realizing a decoration such as a calendar. In such a case, the lenticular lens 100 may be also variably formatted to realize a calendar decoration that achieves a more variable visual effect by, for example, allowing particular colors or drawings to stand out.

For instance, as illustrated in FIG. 7, it is possible that the second image layer 700 has a lattice structure of blocks printed on a transparent film, has numbers expressed in the lattice blocks, and is attached to the first cover 300. In such a case, the second image layer 700 may be created for each month and replaced every month so that the three-dimensional decoration 1000 in accordance with the present embodiment may be used as a perpetual calendar.

Although the calendar is illustrated as an example in FIG. 7, the present invention is not limited to what is illustrated and described herein, and if necessary, various permutations are possible by partitioning one image layer into a plurality of sections to achieve a desired visual effect.

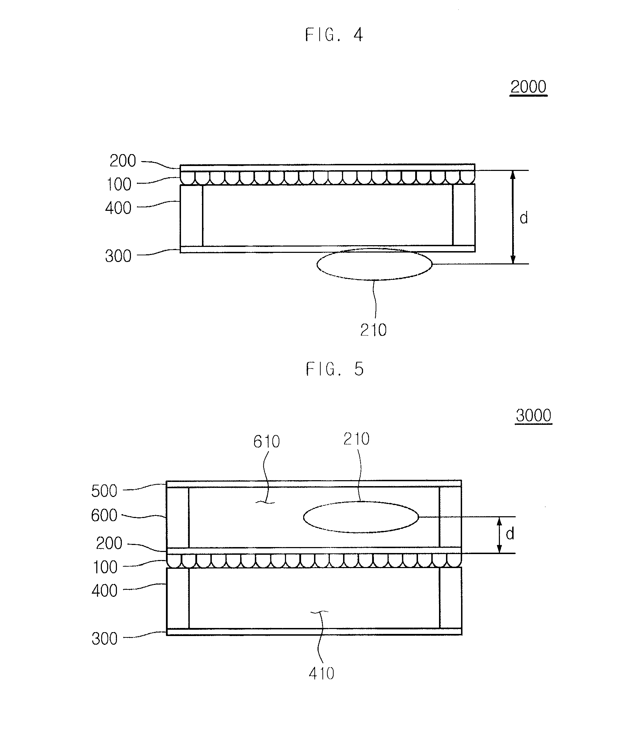

FIG. 4 is a perspective view showing a three-dimensional decoration in accordance with a second embodiment of the present invention.

As illustrated in FIG. 4, a three-dimensional decoration 2000 in accordance with a second embodiment of the present invention may have an image 210 of a first image layer 200 projected partially or entirely in front of a first spatial layer 410, thereby realizing the three-dimensional image 210 in a more various fashion.

This embodiment may be realized through formatting the first image layer 200 in pixel units so as to adjust the difference of viewing angles between the left and right eyes.

For example, by forming a particular person included in the first image layer 200 to be projected in front of the first spatial layer 410, the image 210 of the person may stand out more than other images of the first image layer 200.

Other than the above described feature, the configurations and elements of the three-dimensional decoration 2000 in accordance with the second embodiment of the present invention are identical or similar to those of the three-dimensional decoration 1000 in accordance with the first embodiment of the present invention, and thus the redundant configurations and elements will not be described herein.

FIG. 5 is a perspective view showing a three-dimensional decoration in accordance with a third embodiment of the present invention.

As illustrated in FIG. 5, a three-dimensional decoration 3000 in accordance with a third embodiment of the present invention may have an image 210 of a first image layer 200 receded partially or entirely to the back of a first spatial layer 410, thereby realizing the three-dimensional image 210 in a more various fashion.

This embodiment may be realized through adjusting the difference of viewing angles between the left and right eyes, as described above.

For example, by forming a background portion included in the first image layer 200 to be receded to the back of the first spatial layer 410, an image formed in the first spatial image 410 that is placed in front of the first image layer 200 may stand out more than the image 210 of the background portion.

Here, the three-dimensional decoration 3000 in accordance with the present embodiment may further include a second cover 500 and a second spacer 600 and may have the image 210 of the first image layer 200 formed in a second spatial layer 610.

In such a case, the image 210 of the first image layer 200 may be formed to be projected entirely or partially to the back of the second spatial layer 610, thereby realizing a three-dimensional image with a greater depth.

The second cover 500, which is arranged in the back of the first image layer 200 to cover the second spatial layer 610, may form a rear external appearance of the three-dimensional decoration 3000 in accordance with the present embodiment.

Moreover, in addition to covering a lenticular lens 100, the first image layer 200 and the second spatial layer 610, the second cover 500 may act as a crystal glass-like transparent material together with the second spatial layer 610 so as to create a visual effect that is similar to having the image 210 formed inside the transparent material.

Here, the second cover 500 may include any materials that have a sufficient transparency to allow the image 210 formed in the second spatial layer 610 to be visible to the naked eye.

The second spacer 600, which separates the second cover 500 from the first image layer 200 so as to allow the second spatial space 610 to be formed in between the second cover 500 and the first image layer 200, may be variably arranged within a range of not interfering with the location at which the image 210 is formed, or may be omitted or replaced with another element, if necessary.

Particularly, as illustrated in FIG. 5, by arranging the second spacer 600 along the boundaries of the second cover 500, the second spacer 600 may not only form a lateral external appearance of the three-dimensional decoration 3000 in accordance with the present embodiment but also create a visual effect of the back of a picture frame to allow the three-dimensional decoration 3000 in accordance with the present embodiment to be actually realized as a picture frame.

For instance, by variably forming the shape of the second spacer 600, a TV monitor-like shape may be implemented as if a 3D TV with a 3D screen turned on is visually expressed through the three-dimensional decoration 3000.

Meanwhile, in the three-dimensional decoration 3000 in accordance with the present embodiment, the lenticular lens 100 and the first image layer 200 may be additionally installed by being turned around. Accordingly, by turning around the three-dimensional decoration 3000, it is possible to realize a new three-dimensional image.

Here, the second spatial layer 610. which refers to a space in between the second cover 500 and the first image layer 200, may be formed to have a predetermined width (greater than or equal to "d") to allow the image 210 of the first image layer 200 to be formed in the second spatial layer 610.

In such a case, the second spatial layer 610 may be formed as a typical air layer or may be varied as necessary, for example, as a vacuum layer or a layer including a material having a scattering or reflecting effect.

Other than the above described feature, the configurations and elements of the three-dimensional decoration 3000 in accordance with the third embodiment of the present invention are identical or similar to those of the three-dimensional decorations 1000, 2000 in accordance with the first and second embodiments of the present invention, and thus the redundant configurations and elements will not be described herein.

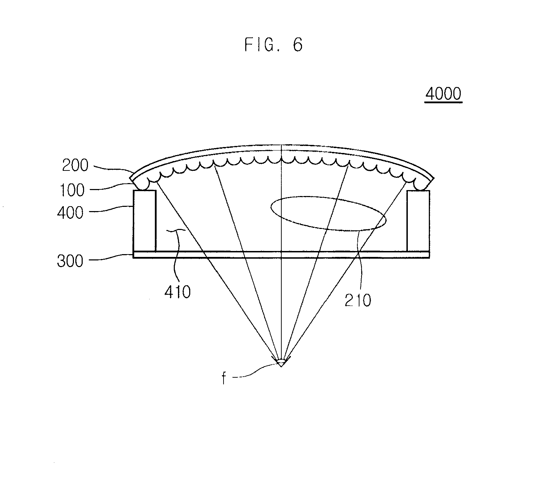

FIG. 6 is a perspective view showing a three-dimensional decoration in accordance with a fourth embodiment of the present invention.

As illustrated in FIG. 6, in a three-dimensional decoration 4000 in accordance with a fourth embodiment of the present invention, a lenticular lens 100 and a first image layer 200 may be formed in a curved shape in such a way that the distance of separation from a first cover 300 becomes smaller toward end portions thereof.

If, for example, the lenticular lens 100 and the first image layer 200 are too wide or too large, a focal point (f) and direction may become different toward the end portions thereof when a user looks at an image 210 at a particular position, deteriorating the three-dimensional effect.

Therefore, in the three-dimensional decoration 4000 in accordance with the present embodiment, by forming the lenticular lens 100 and the first image layer 200 in a curved shape in such a way that the distance of separation from the first cover 300 becomes smaller toward end portions thereof, it is possible for the user positioned at the focal point (f) to clearly perceive the image 210 three-dimensionally without moving the position.

Other than the above described feature, the configurations and elements of the three-dimensional decoration 4000 in accordance with the fourth embodiment of the present invention are identical or similar to those of the three-dimensional decorations 1000, 2000, 3000 in accordance with the first, second and third embodiments of the present invention, and thus the redundant configurations and elements will not be described herein.

Although certain embodiments of the present invention have been described, it shall be appreciated that there can be a very large number of permutations and modification of the present invention by those who are ordinarily skilled in the art to which the present invention pertains without departing from the technical ideas and scope of the present invention, which shall be defined by the claims appended below. It shall be also appreciated that many other embodiments than the embodiments described above are included in the claims of the present invention.

## Claims

1. A three-dimensional decoration comprising:
a lenticular lens;
a first image layer arranged on a rear side of the lenticular lens;
a first cover arranged on a front side of the lenticular lens; and
a first spacer configured for separating the first cover from the lenticular lens in such a way that a first spatial layer is formed in between the first cover and the lenticular lens,
wherein an image of the first image layer is three-dimensionally formed in the first spatial layer by binocular parallax through the lenticular lens.

2. The three-dimensional decoration of claim 1, wherein the image of the first image layer is projected entirely or partially to a front side of the first spatial layer.

3. The three-dimensional decoration of claim 1, wherein the image of the first image layer is receded entirely or partially to a rear side of the first spatial layer.

4. The three-dimensional decoration of claim 3, further comprising:
a second cover arranged on a rear side of the first image layer; and
a second spacer configured for separating the second cover from the first image layer in such a way that a second spatial layer is formed in between the second cover and the first image layer.

5. The three-dimensional decoration of claim 1, wherein the lenticular lens and the first image layer are each formed in a curved shape in such a way that a distance of separation from the first cover becomes smaller toward end portions thereof.

6. The three-dimensional decoration of claim 1, further comprising a second image layer being attached to the first cover.

7. The three-dimensional decoration of claim 1, further comprising a second image layer being attached to the lenticular lens.

8. The three-dimensional decoration of claim 1, further comprising a second image layer being arranged in the first spatial layer.

9. The three-dimensional decoration of any one of claim 5 to claim 7, wherein the second image layer has flexion or curvature formed thereon.

10. The three-dimensional decoration of any one of claim 5 to claim 7, wherein the second image layer is formed in a three-dimensional shape.

11. The three-dimensional decoration of claim 1, wherein the lenticular lens and the first image layer are each partitioned into a plurality of sections that have different forms and are separated from one another.
